# EUROPEAN PATENT APPLICATION

(11) **EP 4 625 393 A1**
(43) Date of publication of application: **01.10.2025**
(21) Application number: 25165032.1
(22) Date of filing: 20.03.2025
(51) Int. Cl.: G09B 5/12, G09B 19/00

(54) **ACTIVITY SUPPORT METHOD, PROGRAM, ACTIVITY SUPPORT DEVICE, AND ACTIVITY SUPPORT SYSTEM**

(30) Priority: 25.03.2024 JP 2024047456; 23.12.2024 JP 2024225968
(71) Applicant: CASIO COMPUTER CO., LTD., Tokyo 151-8543 (JP)
(72) Inventor: Azuma, Yunosuke, Hamura-shi, Tokyo, 205-8555 (JP); Yoshida, Nobuto, Hamura-shi, Tokyo, 205-8555 (JP); Ono, Ryunosuke, Hamura-shi, Tokyo, 205-8555 (JP); Ueda, Masashi, Hamura-shi, Tokyo, 205-8555 (JP); Shimizu, Hiroshi, Hamura-shi, Tokyo, 205-8555 (JP); Ishii, Katsunori, Hamura-shi, Tokyo, 205-8555 (JP); Tomita, Hiroki, Hamura-shi, Tokyo, 205-8555 (JP)
(74) Representative: Grünecker Patent- und Rechtsanwälte PartG mbB

(57) **Abstract**

There is provided an activity support method to be executed by a computer (7, 1, 7a, 1a). The method includes: obtaining a first goal of a first user in an activity; obtaining indicator values of the first user, the indicator values indicating an actual result of the activity; identifying a related indicator from the indicator values, the related indicator changing along with a goal-related parameter that corresponds to the first goal; and outputting information for the first user to improve the related indicator in performing the activity.

## Description

### TECHNICAL FIELD

The present disclosure relates to an activity support method, a program, an activity support device, and an activity support system.

### DESCRIPTION OF RELATED ART

Many runners try to achieve their goals on their own without hiring a trainer. There is known a technology of measuring exercises of a user in an activity and evaluating the activity based on the measurement results. Japanese Patent Application Publication No. 2014-183867 discloses a technology of suggesting an exercise menu for improving a desired sports ability in cooperation with fitness clubs, golf courses, and so forth, based on the exercise performance of the user.

### SUMMARY OF THE INVENTION

Even if users perform an activity to achieve the same goal, their abilities do not improve uniformly. The individual users have their own weaknesses or stagnate in their abilities. The users may need effort to overcome their problems to achieve the goal. Also, the users may not know a method for achieving the goal and may need trial-and-error effort.

An object of the present disclosure is to provide an activity support method, a program, an activity support device, and an activity support system that allow a user to learn more effective contents of the activity for achieving the goal.

According to the present disclosure, there is provided an activity support method to be executed by a computer, the method including: obtaining a first goal of a first user in an activity; obtaining indicator values of the first user, the indicator values indicating an actual result of the activity; identifying a related indicator from the indicator values, the related indicator changing along with a goal-related parameter that corresponds to the first goal; and outputting information for the first user to improve the related indicator in performing the activity.

According to the present disclosure, a user can learn more effective contents of the activity for achieving the goal.

### BRIEF DESCRIPTION OF DRAWINGS

FIG. 1 illustrates a configuration of an activity support system.
FIG. 2 is a block diagram illustrating a functional configuration of a server device.
FIG. 3A is a diagram illustrating contents of registration information.
FIG. 3B is a diagram illustrating contents of history information.
FIG. 3C is a diagram illustrating contents of history information.
FIG. 4 illustrates the flow of an activity support operation in an embodiment.
FIG. 5 is a flowchart of a control procedure of an improvement prediction process to be executed by the server device.
FIG. 6 is a flowchart of a control procedure of an improvement support process to be executed by the server device.
FIG. 7 illustrates another example of the configuration of the activity support system.
FIG. 8 is a block diagram illustrating a functional configuration of the server device in the other example.
FIG. 9 is a table for explaining contents of user registration information in the other example.
FIG. 10 illustrates the flow of activity support in the other example.
FIG. 11A illustrates an example of a goal setting screen.
FIG. 11B illustrates an example of a display screen displaying deviation of actual results from predictions.
FIG. 12A illustrates a different example of the goal setting screen.
FIG. 12B illustrates a different example of the display screen displaying deviation of actual results from predictions.
FIG. 13A illustrates a different example of the display screen displaying deviation of actual results from predictions.
FIG. 13B illustrates a different example of the display screen displaying deviation of actual results from predictions.

### DETAILED DESCRIPTION

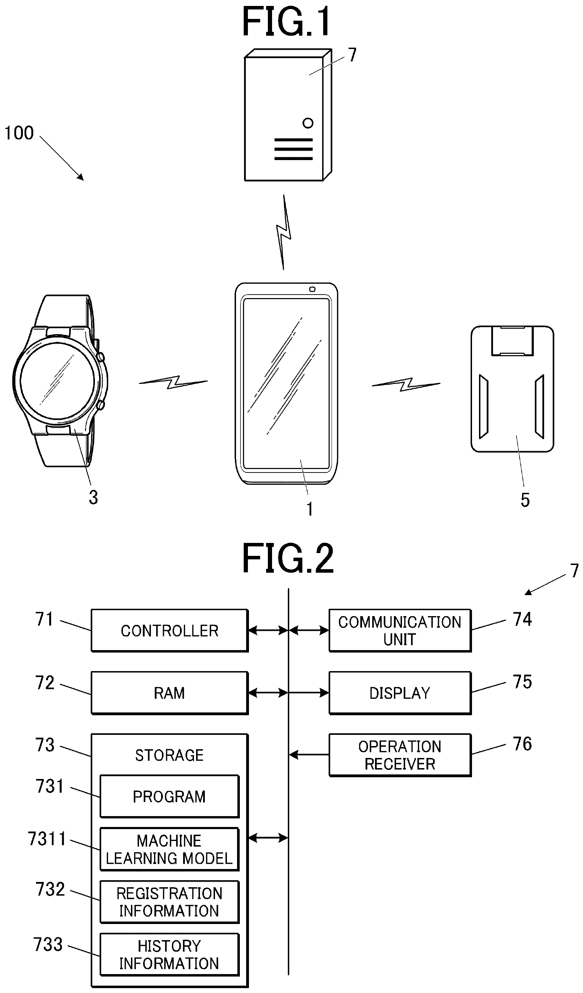

Hereinafter, embodiments of the present disclosure are described with reference to the figures. As shown in FIG. 1, an activity support system 100 relating to the activity support method of the present embodiment includes an electronic device 1, measurement devices 3 and 5, and a server device 7.

The measurement devices 3 and 5 measure the movements, biological information, and so forth of the user and send the measurement data to the electronic device 1. For example, the measurement device 3 is worn on the wrist of the user, and the measurement device 5 is worn on the waist of the user. The measurement devices 3 and 5 may each include part of or all of an acceleration sensor, an orientation sensor, a gyro sensor, and a pulse sensor, for example. The measurement devices 3 and 5 may communicate with the electronic device 1 using short-range wireless communication, such as Bluetooth (registered trademark).

The electronic device 1 orders the measurement devices 3 and 5 to perform measurement, performs integration processing of obtained measurement data, and sends the integrated data to the server device 7. The electronic device 1 may be a terminal device, such as a smartphone. The electronic device 1 can receive and display the result of analysis on the measurement result by the server device 7 and training plans corresponding to a goal set by the electronic device 1. The electronic device 1 can send and receive data to and from the server device 7 via the Internet. In integrating the data, the electronic device 1 may perform partial analysis processing.

The server device 7 is an activity support device of this embodiment. The server device 7 obtains measurement data of registered users from the electronic devices 1 and stores the data. The server device 7 performs analysis operations, based on the obtained measurement data, and sends the analysis results to the electronic device 1. The server device 7 may be a general-purpose electronic computer.

As shown in the block diagram of FIG. 2, the server device 7 includes a controller 71, a random access memory (R_AM) 72, a storage 73, a communication unit 74, a display 75, and an operation receiver 76.

The controller 71 includes a processor that performs calculation processing and that controls overall operations of the server device 7. The processor may be a general-purpose central processing unit (CPU) or an optimized CPU. The controller 71 may include a single CPU or multiple CPUs. The multiple CPUs may perform parallel processing or may operate independently depending on the processing contents. The R_AM 72 provides the controller 71 with a working memory space and stores temporary data.

The storage 73 includes a nonvolatile memory that stores data. The nonvolatile memory may be a flash memory or a hard disk drive (HDD), for example but is not limited to these. The storage 73 stores a program 731, a machine learning model 7311, registration information 732, history information 733, and so forth.

The program 731 includes a control program related to activity support. The details of the program are described later. The machine learning model 7311 estimates improvements in ability of the user. The machine learning model 7311 is generated and stored, based on the ability and goal of the user. The registration information 732 includes information on registered users regarding analysis operations by the server device 7 and the provision of advice based on the analysis results. The history information 733 stores the history of the measurement results obtained during the activity of the user and analysis results. The history information 733 also stores information on a goal(s) set by the user. The registration information 732 and the history information 733 may be stored together in a database device that is connected to the server device 7 directly or via a network. The registration information 732 and history information 733 need to store a collection of data on a large number of users and need to be searched quickly. Therefore, a specially designed and configured database device may be provided to enable efficient storage and search.

The communication unit 74 can communicate with the electronic device 1 over the Internet, as described above. The communications may be done according to a protocol such as TCP/IP or HTTP, for example. The communication unit 74 includes a network card for performing communications in accordance with the protocol.

The display 75 includes a digital display screen and can display letters, characters, symbols, diagrams, images, and so forth under the control of the controller 71. The digital display screen may be, but is not limited to, a liquid crystal display screen or an organic electroluminescent (EL) screen.

The operation receiver 76 receives externally input operations and outputs the contents of the received operations to the controller 71 as electrical signals. The operation receiver 76 may include a keyboard and a pointing device, such as a mouse, for example.

The main body of the server device 7 may include the controller 71, the RAM 72, the storage 73, and the communication unit 74. The display 75 and the operation receiver 76 may be attached to the main body of the server device 7 as peripheral devices, as necessary. That is, in a normal state, the server device 7 operates in accordance with the contents received from the external electronic device 1; and the server device 7 may not receive command operations directly on the operation receiver 76 or perform display on the display screen.

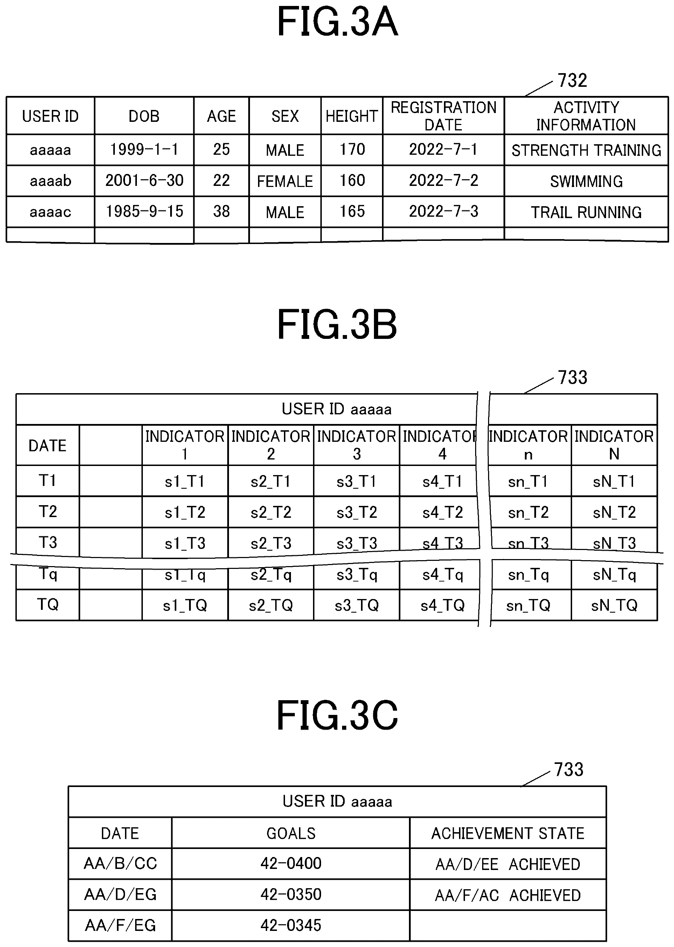

As shown in FIG. 3A, the registration information 732 includes information on registered users. The user information includes an identification ID and personal information of each user, such as the age and/or the date of birth, sex, and height. The personal information may also include information on an activity in which the user is engaged other than running.

As shown in FIG. 3B, for each activity of each user, the history information 733 stores indicators based on the measurement results of the activity. The indicators are stored in association with information on the date and time the activity was performed. The movements of the user in the activity can be evaluated using multiple indicator values (parameters) that indicate the performance based on the actual results of the activity. The indicators of running include the stride, the pitch, the kicking-out time, the impact and direction of landing, the up/down and left/right movements of the center of gravity of the body, the tilt and swing of the body, and the angle or the angle range of arm swing, for example. The indicators of running are not limited to these, though. In FIG. 3B, the indicator 1 may be the stride, and the indicator 2 may be the pitch, for example. In FIG. 3B, "sn_Tq" represents an indicator value of the indicator "n" on a date "Tq". Further, indirect indicators may include the body weight, the weight change rate, the body fat percentage, the pulse rate, and the oxygen saturation, for example. Indicators of the activity result may include the running distance, the running time, the lap time, the split time, and the running speed, for example. Herein, N indicators each having Q indicator values are arranged. The number of indicators depends on the type of activity. The number of data sets increases according to the number of times the activity is performed. In addition to the device that measures the activity, a measurement device that measures life logs, such as daily energy consumption, may also be used. In such a case, the history information 733 may also store information on daily calorie consumption, activity calorie consumption, and number of steps taken, for example.

As shown in FIG. 3C, the history information 733 stores a list of goals set by the user in association with the set dates and the achievement states. One goal is set at one time. Multiple goals may be set simultaneously at one time. Goals may be defined in common formats to allow easy search on all users. In the history information 733, the indicator data shown in FIG. 3B and the goal data shown in FIG. 3C may be stored in any format as long as these sets of data are associated with each other.

Next, the user activity and the activity support are described. Users have various motivations and goals in their activities, such as running. Goals in running may be, for example, recovering the strength of legs or cardiopulmonary function, extending the distance that the user can run, shaving the time record in running a particular distance (e.g., 10 km or a marathon), losing weight, and decreasing the body fat percentage. Among the above-mentioned indicators, the indicator of the activity result can be an indicator value related to a goal in training (goal-related parameter). Further, the weight, the amount of decrease in weight, the body fat percentage, and so forth can also be the goal-related parameter. That is, when the goal-related parameter reaches a target value, the goal is achieved. For example, when the goal is to run 10 km in one hour, the requirement for achieving the goal is either (i) the running time of 10 km (the goal-related parameter) is less than one hour or (ii) the split time in running 10 km or longer is less than one hour. The degree of improvement in the goal-related parameter can be the goal achievement rate.

Changes in an indicator may correlate with improvements in the goal-related parameter. That is, when the value of the indicator improves, the goal-related parameter is also likely to change and improve along with the value of the indicator. In many cases, multiple indicators (related indicators) correlate with one goal-related parameter. Therefore, even if some of the related indicators improve, the goal-related parameter may not improve sufficiently. In other words, improving the running style based on these related indicators contributes to improving the goal-related parameter. When the user performs the activity for achieving the goal, the direction of practice can be determined and output so that the indicators directly related to the goal are improved. For some aspects of the correlation and the direction of practice, logical methods have been established. On the other hand, in this embodiment, an indicator(s) that directly correlates with changes (improvements) in the goal-related parameter is numerically detected from practice data of a large number of users. In each training session, it is determined whether there is any indicator among the related indicators that has not improved appropriately. If there is an indicator that has not appropriately improved, advice on how to improve the indicator is output. Herein, referring to data of other users having significantly different characteristics from the characteristics of the target user who receives advice (first user) may yield useless and meaningless results for the target user. In this embodiment, practice data of other users (second users) is referred to. The second users have corresponding user characteristics that correspond to the characteristics of the target user and who have goals (second goals) in the same goal range as the goal of the target user. Based on the practice data of the second users, the correlation (relation) is determined. The corresponding user characteristics include physical characteristics and behavioral tendencies similar to that of the first user. The same goal range may be, for example, the difference within ±10% in the running distance and the difference within ±10% in the goal running time.

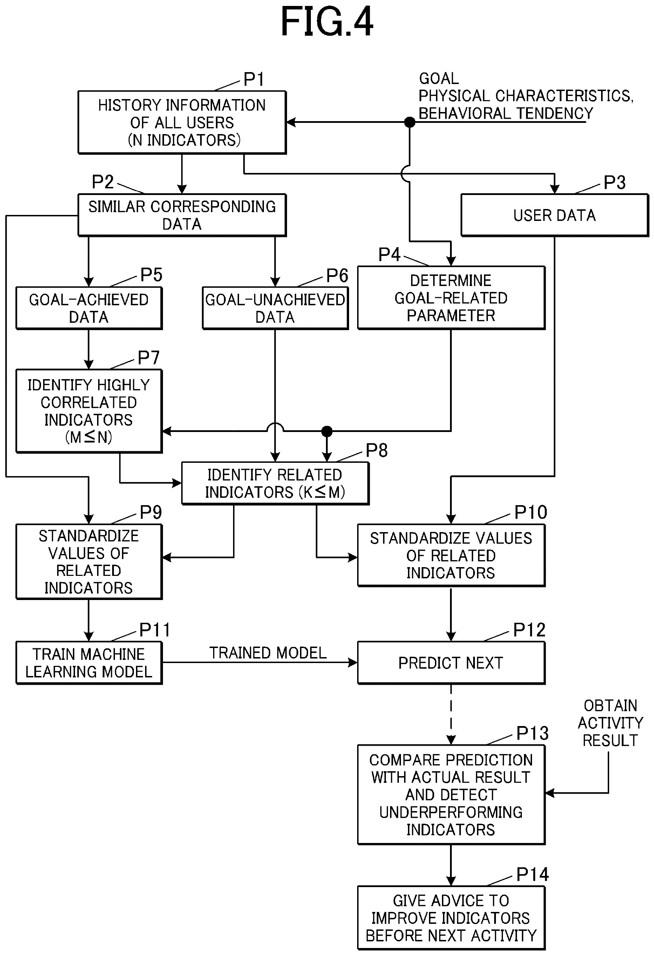

As shown in FIG. 4, in this embodiment, the history information 733 of all users stored in the server device 7 is referred to (P1); and practice data of the second users who have similar physical characteristics and behavioral tendencies to the target user (first user) and whose goals are in the same goal range as the target user is extracted as similar corresponding data (P2). The data of the target user is extracted separately (P3). The similar corresponding data is classified into data of third users who achieved their goals (P5) and data of fourth users who failed to achieve their goals (P6). Herein, all the indicators (N indicators) stored in the entire user history information are obtained. From the data of the fourth users who failed to achieve their goals, data of users who have a specifically low goal achievement rate may be extracted as goal-unachieved data. The goal achievement rate may be, for example, the ratio of (i) the difference between the final value of the goal-related parameter and the initial value of the goal-related parameter to (ii) the difference between the initial value of the goal-related parameter and the target value (goal value) of the goal-related parameter. The initial value of the goal-related parameter is set at the time of setting the goal.

The similarity in physical characteristics can be determined by height, weight, sex, and age, for example. The height, weight, and age may be determined to be similar if they match the height, weight, and age of the target user within a range (first reference range) of ±5 cm, ±5 kg, or ±5 years, for example (first requirement). For another example, a relative range, such as ±10%, may be defined for the values of each target user. The range of age, height, and weight may be determined based on different criteria. These pieces of information may be obtained from the registration information 732. The latest data of the weight and body fat percentage may be obtained from the history information 733 in which the user inputs the latest values thereof.

In determining the similarity of behavioral tendencies, the similarity of basic items is considered. The basic items include the frequency of training (running), the duration of each training session, the period during which the user has continued practice so far, and the blank period, for example. In addition to these basic items, additional items may be considered in determining the similarity. The additional items include information on whether the user performs activities other than running and the amount of exercise in daily life, for example. The information on the basic items may be obtained beforehand from the practice history of the user or may be obtained each time from the data obtained in step P3. Activities other than running may include, for example, walking, cycling, trail running, mountain climbing, and swimming. The amount of exercise in daily life may include how much the user walks in commuting, how much the user moves during work, and the load in housework, for example. Part of or all the items regarding the amount of exercise in daily life may be measurable by the measurement devices 3 and 5. When the measurement devices 3 and 5 cannot perform measurement on a certain exercise, information on such an exercise (e.g., the activity date and type) may be obtained from input operations by the user. The activity state of muscle training that is difficult to measure (e.g., abdominal and back exercises, push-ups, and pull-ups) may be obtained from input operations by the user or may be simply included in exercise in daily life. For example, a quantitative evaluation value may be obtained by adding points to a value indicating the similarity of the basic items. The points to be added are determined based on how many additional items are matched. The quantitative evaluation value may be compared with a reference value (second reference range) to determine the similarity in behavioral tendencies (second requirement). In this embodiment, the similarity in physical characteristics and behavioral tendencies includes cases where the height, the training frequency, and so forth are the same between the users.

The individual users can set their goal in the activity (first goal) that they wish to achieve by input operations. The set goal is added and registered in the setting data shown in FIG. 3C. If the goal is changed to a different goal before being achieved, the goal before the change may be regarded as an unachieved goal that the user failed to achieve. The goal may be set along with a deadline. In a case where the user did not achieve the goal by the deadline but kept the goal and achieved it after the deadline, the achieved goal may be treated differently from normal achieved or unachieved goals. In a case where the user canceled the goal before the deadline without achieving it, the goal may be treated differently from normal unachieved goals.

The goal-related parameter corresponding to the goal is determined (P4). The correspondence between the goal and the goal-related parameter may be stored beforehand in the storage 73. Among the obtained N indicators in the goal-achieved data of the third users, the correlations between the goal-related parameter and the N-1 indicators except the goal-related parameter are calculated; and an indicator that correlates with the goal-related parameter by a degree greater than a first reference is determined as a highly correlated indicator (first indicator) (P7). The correlation may be determined, for example, by a correlation coefficient (Pearson's product moment correlation coefficient) or by other kinds of correlation indices. The kinds of correlation indices to be calculated may vary depending on the set goal. For each of the goals, the storage 73 may store beforehand the kinds of correlation indices, equations or a correspondence table for determining the correlation, and the first reference for determining the highly correlated indicator. For example, when the goal is to run 10 km within one hour, the goal-related parameter may be the running time of 10 km. For another example, when the goal is to reduce weight by 3 kg, the goal-related parameter may be a change in weight. The correlation index calculated between the running time of 10 km and other parameters may be different from the correlation index calculated between a change in weight and other parameters. Herein, the parameters other than the running time of 10 km as the goal-related parameter may include the change in weight. The parameters other than the change in weight as the goal-related parameter may include the running time of 10 km. The kind and value of the correlation index calculated between the parameter A and the parameter B when the parameter A is the goal-related parameter may be different from the type and value of the correlation index calculated between the parameter A and the parameter B when the parameter B is the goal-related parameter. The number of highly correlated indicators varies depending on the goal. Herein, the number of highly correlated indicator is set to M. Next, among the M highly correlated indicators in the goal-unachieved data of the fourth users, a related indicator(s) is determined (P8). The related indicator has an improvement rate less than a second reference as compared with the goal achievement rate. The second reference may be determined based on the degree of variations in each indicator. For example, the range of variations in an indicator that occur in daily training even when the ability is not improved may be specified and stored in the storage 73 beforehand. The number of such related indicators (herein, K) also differs depending on the goal. The relation of N ≥ M ≥ K is always satisfied.

The values of the K related indicators identified from the similar corresponding data are standardized (P9). The indicators have different numerical values and different amounts of change depending on the originally measured physical quantities and the unit system of output values. To equalize the influence of the individual indicators, the indicators are standardized based on the mean values and variance values of the respective indicators. Further, the related indicators in the measurement history of the target user obtained so far after setting the goal are standardized in the same way (P10). The same mean values and variance values in step P9 are used for standardization.

The time-series data of combinations of the goal-related parameter and the standardized related indicator is used as input data to train a machine learning model 7311 that outputs a predicted value (estimated value) of the related indicator after the next activity. With the input data, the machine learning model 7311 is trained (P11). The time-series data to be input may be discrete data on the "Q0" times of the activity performed most recently. In this case, if the number of times of the activity performed after setting the goal exceeds Q0, a common machine learning model 7311 can be used. For another example, the time-series data to be input may be all the data after the goal was set. In this case, different machine learning models 7311 may be trained for each number of times the activity was performed after the goal was set. As a machine learning model, deep learning may be used, for example. A machine learning model using a decision tree may be used. The machine learning model 7311 may be trained using a backpropagation method, for example. The value of the related indicator may be estimated based on cases where the goal was achieved. In such a case, only the related indicators of the goal-achieved data may be standardized in step P9 and used for training the machine learning model 7311.

The indicators stored as the practice history of the target user are input to the trained machine learning model 7311, and estimated values of the respective related indicators after the next activity are obtained (P12). At least the steps P10 and P12 are executed after the user performs one session of the activity and before the user starts the next session of the activity. The steps P1 to P9 and P11 may be executed one time after the activity is set and when the user performs the activity by the minimum number of times required for the next prediction. Thereafter, the result of the steps may be stored. For another example, the steps P1 to P9 and P11 may be executed each time the user performs the activity by a predetermined number of times (one time or more), and the stored data may be updated. For another example, whether to execute the steps P1 to P9 and P11 may be determined depending on the improvement state of the indicators as improvement targets, which are described later.

When the user performs the next session of activity and the indicators are obtained, the obtained indicator values (actual values) are compared with their corresponding estimated values, and an actual value inferior to the estimated value is identified (P13). When an actual value of an indicator is inferior to the estimated value by a certain reference or greater, the indicator is determined to be an improvement target indicator that is to be improved in the next session of activity. The determined improvement target indicator is output to the electronic device 1 and is notified to the user immediately or before the user starts the next session of activity (P14). In addition to the improvement target indicator, effective training contents for improving the improvement target indicator may be suggested. Information indicating the correspondence between the improvement target indicators and training contents may be stored in the storage 73 beforehand.

Thus, the trained machine learning model 7311 need not yield accurate estimate values of the indicators but outputs values indicating changes of the respective indicators on the way toward the goal, on the assumption that the user will achieve his/her goal. Thus, when the user faces a problem in improving the related indicators for achieving the goal, the user is encouraged to improve these related indicators and certainly improve the goal-related parameter.

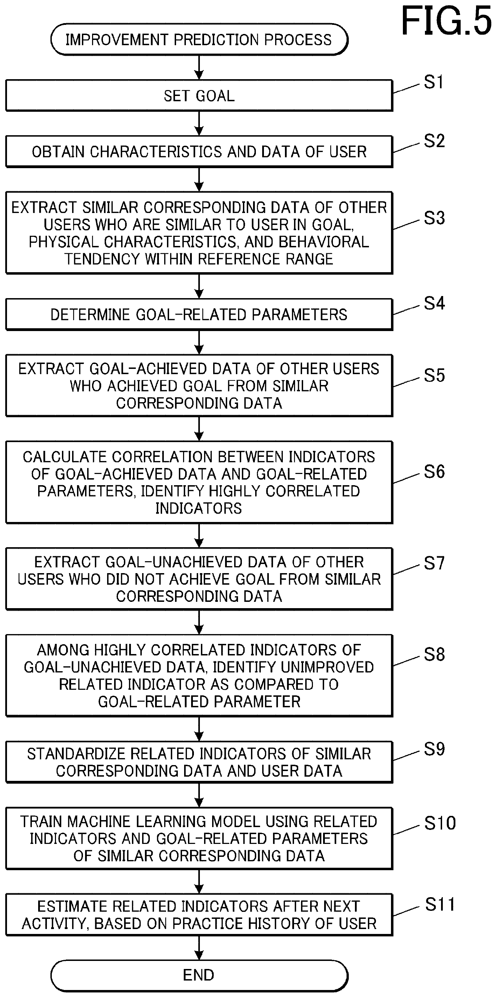

The improvement prediction process shown in FIG. 5 corresponds to the above steps P1 to P12. When the controller 71 obtains measurement results on the activity from the electronic device 1 of the registered user and obtains the indicators corresponding a required number of times of the activity for prediction, the controller 71 reads out and executes the program 731 to perform the improvement prediction process.

The controller 71 sets a goal to be achieved by the target user (S1: goal obtaining means). To obtain the goal, the communication unit 74 may obtain information set by the user's input operations received on the electronic device 1, for example. The controller 71 obtains physical characteristics and behavioral tendencies as the characteristics of the user and obtains data of the user after the goal has been set (S2: indicator obtaining means). The controller 71 obtains physical characteristics except values related to the body weight from the registration information 732. The controller 71 obtains the value related to the latest body weight and indicator data from the history information 733. Regarding the behavioral tendencies, the controller 71 obtains information on other activities from the registration information 732 and obtains information on the continuation of the activity, the frequency of the activity, the time during which the activity is performed, blank information, and so forth from the history information 733.

The controller 71 refers to the history information 733 and extracts the similar corresponding data of other users (second users) whose physical characteristics, behavioral tendencies, and goals are similar to that of the user within a reference range (S3). The controller 71 determines the goal-related parameter that relates to the goal by referring to the storage 73, for example (S4).

From the similar corresponding data on the second users, the controller 71 extracts the goal-achieved data of the third users who achieved their goals (S5). The controller 71 calculates the correlation between the indicators and the goal-related parameter in the goal-achieved data; and the controller 71 identifies the highly correlated indicator(s) that correlates with the goal-related parameter by a degree greater than or equal to a first reference (S6). As described above, the controller 71 may refer to the storage 73 to obtain the type of the correlation index, the method of determining the correlation index, and the first reference that correspond to the goal-related parameter.

From the similar corresponding data of the second users, the controller 71 extracts the goal-unachieved data of the fourth users who did not achieve their goals (S7). From the highly correlated indicators in the goal-unachieved data, the controller 71 identifies a related indicator(s) that has not improved as compared with the goal-related parameter (S8: identifying means). As described above, the controller 71 may extract data having a goal achievement rate less than the second reference in addition to the data on goal-unachieved cases. The controller 71 standardizes the related indicators of the similar corresponding data and the user data (S9). Using the related indicators and the goal-related parameters in the similar corresponding data, the controller 71 trains the machine learning model 7311 (S10). The controller 71 inputs the user's practice history data into the trained machine learning model 7311 and obtains the estimated values of the related indicators after the next activity (S11). The controller 71 ends the improvement prediction process.

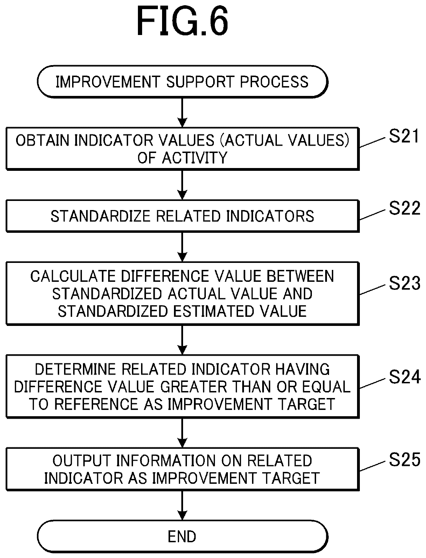

The controller 71 starts the improvement support process shown in FIG. 6 after (i) the improvement prediction process ends and (ii) the controller 71 obtains measurement data of a session of activity after the session of activity ends. The controller 71 obtains the indicator values of the activity (S21: indicator obtaining means). The controller 71 may calculate the indicator values from the measured values or may simply obtain the indicator values calculated externally. The controller 71 standardizes the related indicators (S22). The mean values and variance values used for standardization herein are the same as those used in standardization of the similar corresponding data.

The controller 71 obtains a difference value by subtracting the standardized estimated value from the standardized actual value (S23). The controller 71 determines the related indicator that has the difference value greater than or equal to or a reference to be an improvement target (S24). The controller 71 outputs information on the related indicator as the improvement target to the electronic device 1 (S25: outputting means). As described above, the controller 71 may also output advice information on the practice contents for improving the related indicator to the electronic device 1. The controller 71 ends the improvement support process.

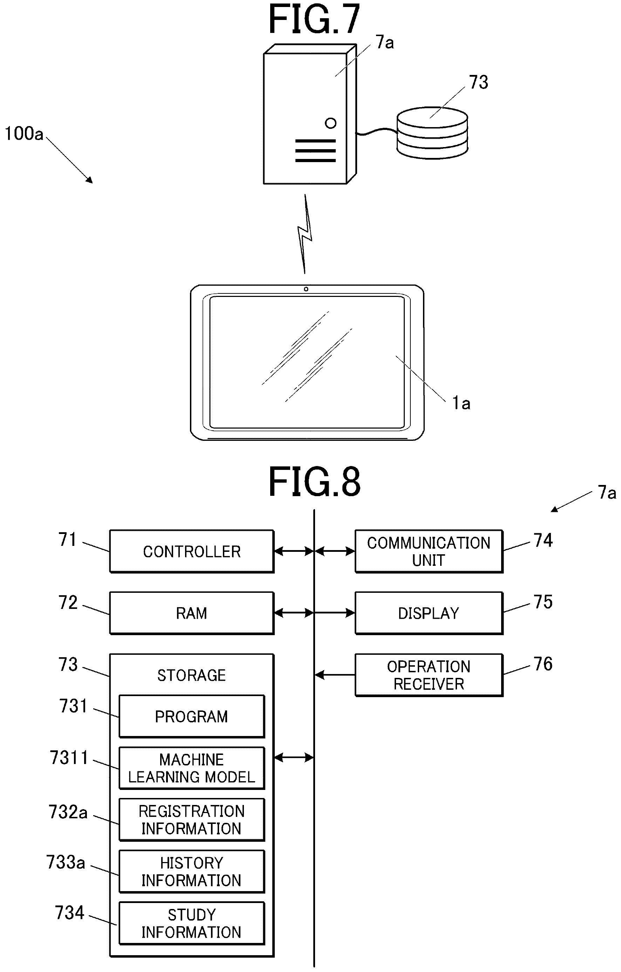

The contents of the activity are not limited to the running-related contents described above. The activity is not limited to physical activity but may be studying a particular subject/course. An activity support system 100a according to a second embodiment is aimed at supporting improvement of academic ability. As shown in the system configuration diagram of FIG. 7, the activity support system 100a may include a server device 7a and an electronic device 1a. The electronic device 1a may be a tablet terminal or a notebook PC, for example. The electronic device 1a may also be a desktop PC. The server device 7a may include an externally attached storage 73 that serves as a database.

As shown in FIG. 8, in the second embodiment, the storage 73 of the server device 7a stores study information 734 in addition to the registration information 732a and the history information 733a. The study information 734 includes explanatory texts and practice questions to be provided to the user. The texts and practice questions are associated with a subject and unit. The texts and practice questions may be associated with multiple units. The degree of understanding and the degree of academic achievement in each unit required for comprehending each text and correctly answering each practice question may be quantified and stored.

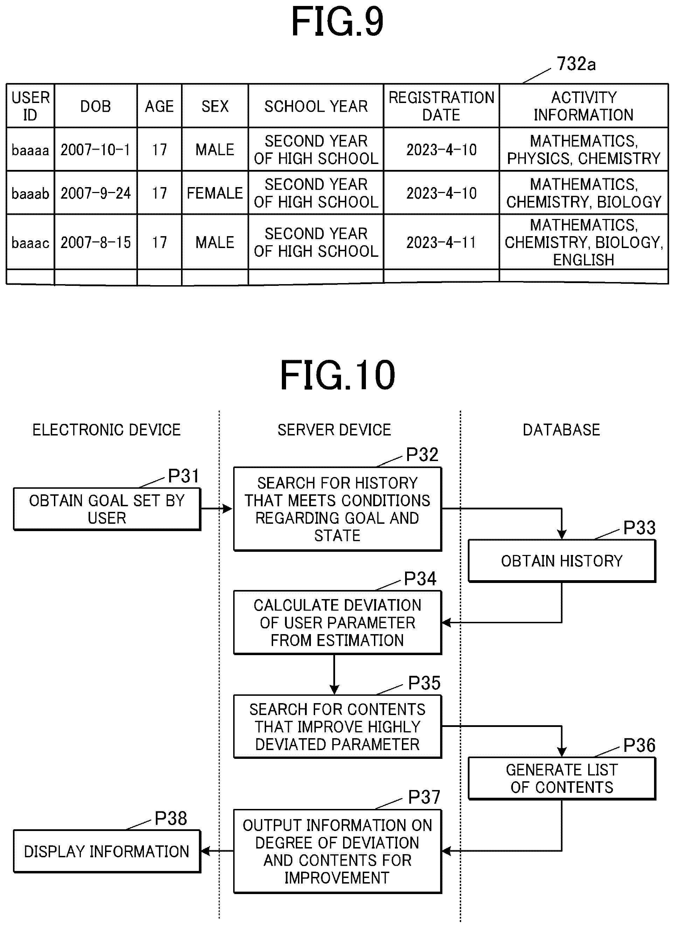

As shown in FIG. 9, information such as the physique of the user is not required in the user registration information 732a. Instead, information such as the school year is stored. The activity information may include a subject as a target of support.

The history information 733a stores the states of the individual users regarding reviewing the texts and answering the practice questions. In addition, the degree of understanding and the degree of academic achievement may be calculated for each unit, based on the state of each user regarding reviewing the texts and correctly answering the practice questions. The degree of understanding and the degree of academic achievement may be included in the above indicators. Further, the history information 733a stores performance information in examinations such as mock examinations. The performance information may include the score of each question (section) in addition to the score of each subject. The performance information may be input by the user. For another example, the administrator of the server device 7a may obtain the performance information directly from executors of the mock examinations, based on a contract. The performance information can also be used to calculate the degree of understanding and the degree of academic achievement. The degree of understanding and the degree of academic achievement may be calculated using, for example, the item response theory (IRT) or knowledge training.

The indicators regarding the academic ability of the user may include indirect parameters that affect the performance across units, in addition to the direct parameters such as the degree of understanding and the degree of academic achievement in each unit. The indirect parameters may include, for example, the calculation ability (e.g., how many points are deducted owing to calculation errors), the ability to read and understand questions (e.g., the relation between the correct answer rate and the length of a question or the presence of an explanatory diagram), the spatial recognition ability (e.g., the difference in the correct answer rate between questions involving two-dimensional figures/vectors and questions involving three or more dimensional figures/vectors).

In this embodiment, the goal (first goal) may be set to: passing a school entrance examination, a certification examination, or a qualification examination; or a score, ranking, or deviation value in a particular mock examination, for example. If the achievement of a goal is determined by comprehensive evaluation of multiple subjects by examinations, the goal may include the user's strong subject to earn points or the user's weak subject to improve the performance in the weak subject such that the weak subject can be covered by other strong subjects. The question trends in entrance examinations and mock examinations, the difficulty of each subject, the frequency of questions in each unit, the number of examinees, and the academic level of the examinees can be obtained from statistical information of the respective indicators (indicator values) of the examinees on the performance in the past examinations and mock exams.

FIG. 10 shows the flow of giving advice for the user to improve the indicators, based on changes in the indicators of other users who set goals at around the same level. The flow in FIG. 10 is basically the same as the flow shown in FIG. 4 to FIG. 6 of the first embodiment. Specifically, the goal-related parameter, which is set according to the first goal (P4, S4), in FIG. 4 and FIG. 5 corresponds to the expected level (score) for passing an examination. When the expected level changes, the range of similar corresponding data (P2, S3) on other similar users changes. Herein, the other similar users are users who have set similar expected levels for passing the examination. The range of data on other users who achieved their goals (P5, S5) and the range of data on other users who did not achieve their goals (P6, S7) also change accordingly. Based on the highly correlated indicator (P7, S6) and the related indicators (P8, S8) that are identified in steps P4 to P6 and steps S4, S5, and S7, the unit proficiency may be changed. The highly correlated indicators are the degree of academic achievement, the degree of understanding, and indirect parameters in the unit (hereinafter referred to as unit proficiency) that have been increased among goal achievers through study training. Among these highly correlated indicators, the related indicator is the unit proficiency that was not improved or the improvement rate of which was insufficient among users who did not achieve their goals. Changes in the unit proficiency as the related indicator may include an increase or decrease in the number of units. The machine learning model 7311 learns changes in the unit proficiency (the related indicator) at each timing of the study period, based on the similar corresponding data corresponding to the first goal (P11, S10). In FIG. 4 and FIG. 6, the controller 71 compares the difference between (i) the most recent changes (actual results) in the respective related indicators of the user (S21) and (ii) the estimated changes (predictions) in the respective related indicators estimated by each machine learning model 7311 (S23). The controller 71 detects a unit that has not been improved by the user as compared with the goal achievers, especially a unit that has a particularly great difference (deviation) (P13, S25). When the goal is to improve academic ability, the controller 71 of the server device 7a can find and provide study contents for improving the unit proficiency that is below the prediction, in addition to simply generating and outputting advice. FIG. 10 includes steps P35 to P38 that are related to finding and providing the study contents.

When the controller 71 of the server device 7a obtains the goal set by input operations of the user on the electronic device 1a (P31: corresponding to S1), the controller 71 sets conditions (requirements) corresponding to the goal and the state of the user so far and searches for the history of other users who meet the requirements (P32: corresponding to S2 to S4). The search conditions regarding the state of the user do not need physical characteristics in improving academic ability. Behavioral tendencies may include the study frequency, the study time, the study time zones, and the times allocated for the respective subjects. Behavioral tendencies may also include whether the user attends a preparatory school, whether the user uses a correspondence course, and the study methods used in the past. The indirect parameters different from parameters that directly indicate the learning state may include, for example, whether the user studies while doing other things (e.g., while putting on background music) and whether the user uses social media services or a portable terminal while studying.

The controller 71 obtains the search result from the storage 73 (database) (P33: corresponding to S5 and S7) and predicts the academic ability of the user corresponding to his/her study. When obtaining the actual result, the controller 71 determines the degree of deviation of the actual result from the prediction (P34: corresponding to S6, S8, S9 to S11 and S21 to S23).

The controller 71 searches the storage 73 for contents that improve the parameter having a high degree of deviation (P35). The controller 71 generates and obtains a list of improvement contents (P36) and outputs the list as display data to the electronic device 1a along with information on the degree of deviation (P37). The electronic device 1a displays the received information (P38). When the user selects one of the displayed improvement contents, the electronic device 1a can request and obtain the selected improvement content from the server device 7a and display the content (P38).

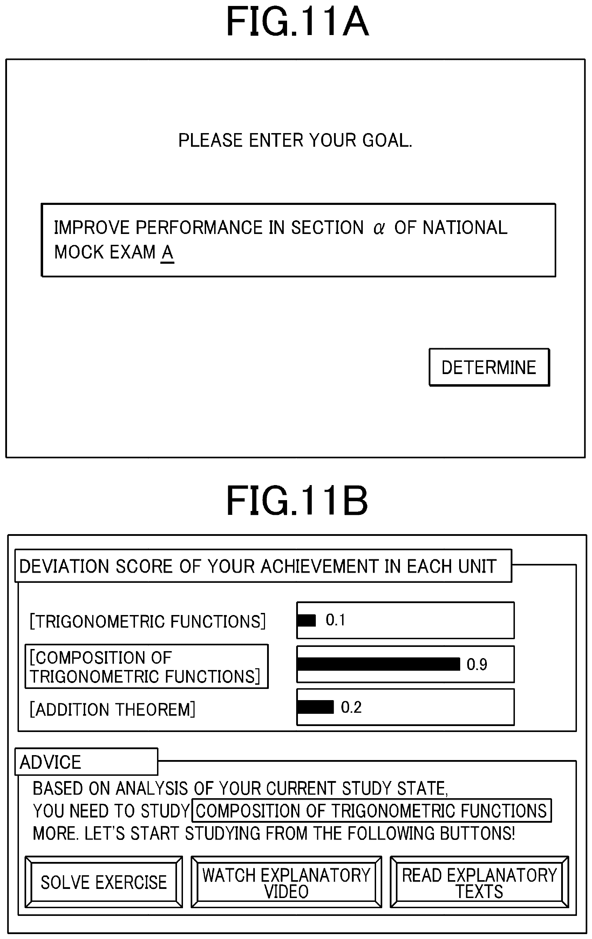

As shown in FIG. 11A, the goal may be set (S1) as desired by the user by input operations on the operation receiver 76, for example. The contents set by the user may be identified by natural language analysis, for example. For another example, the goal may be selectable from predetermined options.

As shown in FIG. 11B, the comparison result between the prediction and the actual result (P13) and the advice for improving the indicator (P14) may be displayed on the same screen. The advice for improving the indicator may be prepared by inserting a unit name or the like in template sentences prepared beforehand, for example. For another example, the advice texts may be prepared by creating sentences incorporating a unit name or the like, based on the AI technology using a transformer. Further, the study information 734 may be searched for the study data corresponding to the advice. The display may then display selection buttons to proceed to viewing texts or answering practice questions contained in the found study data (contents).

In preparation for an entrance examination or a mock examination, whether the user passes or fails the examination and the rank of the user are determined by the overall rating. Therefore, the user may be able to achieve the goal even if the user lacks understanding or proficiency in a specific unit of a specific subject, or in extreme terms, even if the user gives up improving the academic ability of the unit. Further, the tests of the respective subjects in an entrance examination or mock examination do not always cover all the units. The indicator of a unit in which a large proportion of users gave up improving their abilities may be less likely to appear as goals of the activity. Further, the timing of overcoming a weak unit does not always correspond to the timing of improving the performance in real time, depending on when the user overcomes the weak unit and when questions on the unit are set on examinations. Further, when the user has two or more weak subjects, the order of overcoming the weak subjects may differ depending on the user. Therefore, in training and using the machine learning model 7311, indicator values corresponding to a reference number of times may be used based on the timing at which the goal achievers focused on studying the target unit, instead of using the entire indicators of the goal achievers.

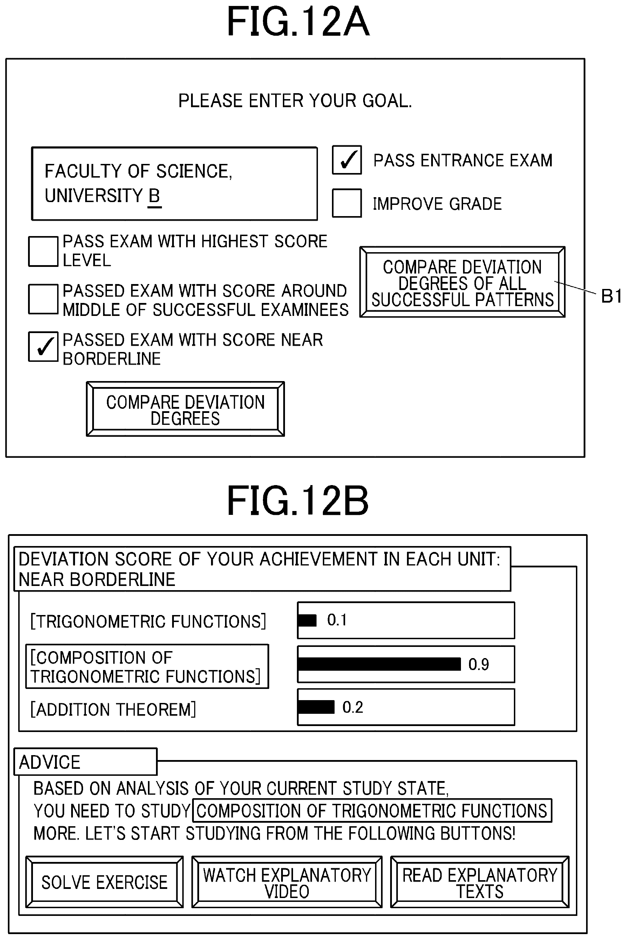

For another example, when the user sets a goal to passing an examination, the user may be allowed to select a level at which the user wishes to pass the examination, based on the level or intension of the user. As shown in FIG. 12A, when setting the goal to passing an examination, the user may be allowed to select a level at which the user wishes to pass the examination. For example, the user may be allowed to select (i) passing the exam at the highest score level, (ii) passing the exam at the level around the middle of successful examinees, or (iii) passing the exam at the level around the borderline, as more detailed options for setting the first goal of the user.

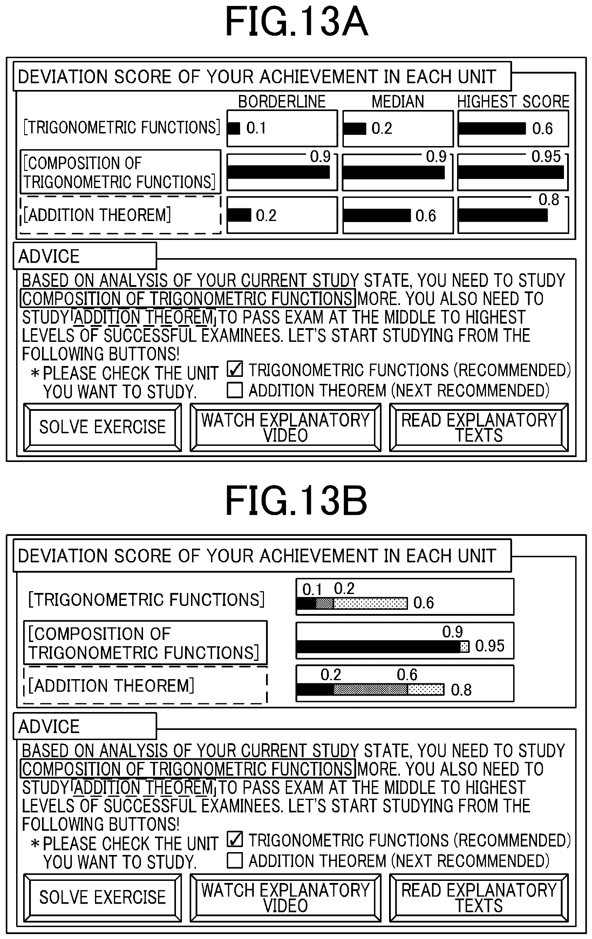

When the user selects any one of the options, the display may display the unit proficiency required for the selected level and the deviation of the user's current unit proficiency from the required unit proficiency, as shown in FIG. 12B. At the initial setting or when the user considers adjusting the goal to be higher or lower, the display may display the degrees of deviation in all the levels in response to the user selecting the press button B1. In this case, the above processes and steps may be performed sequentially or in parallel for the respective first goals, and a unit corresponding to a greater degree of deviation (the difference between the prediction and the actual result) may be detected. As shown in FIG. 13A, in the all-at-once display, the degree of deviation of the current unit proficiency from the unit proficiency required for each target level may be displayed side by side. The degree of deviation may be great in multiple units depending on the target level. In such a case, the user may be allowed to select a unit to study first from the multiple units. The higher the goal is, the greater the deviation becomes. As shown in FIG. 13B, the degrees of deviations having different colors or patterns may be superposed on each other on the same graph. When the goal is too high, it is expected that not many users achieved the goal starting from the same level of ability in the past. For example, when the user wishes to be in the first place of a top-level school (i.e., there is no upper limit) or when the user wishes to pass an exam at the middle or higher ranks even though the user is far below the borderline, there may not be enough data to obtain accurate changes in the related indicators. In such cases, when the degree of deviation is displayed, the user may receive comments indicating that an accurate degree of deviation may not be provided or that it is difficult to provide future activity support.

As described above, the activity support method of this embodiment includes the following steps: (1) obtaining a first goal of a first user in an activity; (2) obtaining indicator values of the user, the indicator values indicating an actual result of the activity; (3) identifying a related indicator from the multiple indicator values, the related indicator changing along with a goal-related parameter that corresponds to the goal; and (4) outputting information for the user to improve the related indicator in performing the activity. The present activity support method checks how much the related indicators have been improved, which highly correlate with the goal-related parameter corresponding to the goal and change along with the goal-related parameter. The activity support method then outputs information that encourages the user to improve the related indicator that has a particularly low degree of improvement. Thus, to achieve the goal, the user is allowed to grasp a specific aspect that has not been improved as estimated in the activity. The user is allowed to learn and perform the activity in a more effective way to achieve the goal, based on the aspects that need improvement.

The related indicator may be determined, based on the relation between the goal-related parameter and indicator values of other users who set a second goal similar to the first goal and who have a characteristic corresponding to a characteristic of the first user. The related indicator is determined based on actual data of the other users when the other users were trying to achieve their goals in the past under similar conditions to the target user. Therefore, a realistic relation between the goal-related parameter and multiple indicator values can be obtained, based on the current level and goal level of the target user. Accordingly, realistic improvement trends of the related indicators are obtained, and the target user is allowed to learn the relative improvement state of each related indicator.

The second users include third users who achieved their second achievement goals and fourth users who did not achieve their second achievement goals. The related indicator may be an indicator that satisfies the following: (i) in indicator values of the third user, the indicator correlates with the goal-related parameter by a degree greater than a first reference, and (ii) in indicator values of the fourth user, the indicator has an improvement rate less than a goal achievement rate of the goal-related parameter and less than a second reference. That is, the related indicator may be an indicator that highly correlates with the goal-related parameter but that does not improve by other factors. Thus, the influence of other factors is reduced, and the user can effectively improve the goal-related parameter by improving the activity contents regarding the related indicators.

Further, the second users having the characteristic corresponding to the characteristic of the first user may meet a first requirement that the second users have a physical characteristic within a first reference range from a physical characteristic of the first user. That is, users similar to the target user may have similar physical characteristics to that of the target user. The users of different ages, sexes, heights, weights, and other different physical characteristics may face different problems or may have different solutions even if they face the same problem. Therefore, the data to be referred to is limited to the data of other users who have similar physical characteristics to the target user. Thus, the target user is allowed to grasp the way toward the goal and how much the user deviates from the way, based on cases of users having similar conditions to the target user.

Further, the second users having the characteristic corresponding to the characteristic of the first user may meet a second requirement that the second users have a behavioral tendency within a second reference range from a behavioral tendency of the first user. The behavioral tendencies may also be important parameters in addition to or instead of the physical characteristics in identifying other users similar to the target user. Users who follow completely different activity strategies or users who perform other activities in addition to the target activity are likely to proceed different paths toward the goal, since their basic conditions are significantly different. Based on the comparison of changes in the related indicators between the target user and the other user having similar behavioral tendencies, the target user is allowed to properly grasp his/her problems and how much he/she has improved toward the goal.

Based on the correlation between the goal-related parameter and the related indicator of the second users, an estimated value of the related indicator, which changes as the first user performs the activity, may be obtained. Based on a difference between the estimated value and an actual value of the related indicator obtained from the performance of the activity by the first user, the information for improving the related indicator may be output. Thus, in the way toward the goal in the activity, the user can easily learn that the actual improvement rate deviates from the estimated improvement rate, particularly that the actual improvement rate is falling behind the estimated improvement rate. The user can swiftly learn that his/her improvement state in the related indicators deviates from the standard improvement state and adjust the activity contents. Thus, according to the activity support method, the user is allowed to efficiently obtain information necessary for achieving the goal and perform the activity.

Further, the estimated value of the related indicator may be obtained by using the machine learning model 7311 that is trained based on the correlation between the goal-related parameter and the related indicator and that outputs an estimated value of the related indicator to be obtained next in response to input of time-series data of the related indicator obtained multiple times. The ability of the user does not always improve linearly. The user may stagnate at certain points, may require more time to master certain aspects, and may rapidly improve by catching key points. With the machine learning model 7311, improvement of ability can be accurately predicted. This restrains the user from getting impatient too much or becoming conceited, and the user is effectively guided toward his/her goal.

It may also be possible to obtain multiple levels of the first goal at one time. The related indicator may be determined for each of the multiple levels of the first goal. When the user is at an early stage or when the user is at an intermediate level of goals that can be set based on performance, the user is allowed to know aspects that are delayed in improvement and the degree of the delay with respect to the multiple goals. Thus, the user can effectively recognize not only whether the user has achieved the goal but also how much the user has improved and can perform training toward the goal in the activity including studying.

The activity may include studying aimed at academic improvement. That is, the above disclosure may be applicable not only to exercise training but also to brain training. If an ability and its improvement in brain training can be numerically expressed by multiple parameters, the same algorithm is applicable to obtaining past results of other similar users. Therefore, according to the activity support method of the present embodiment, it is possible to provide the user with effective information for improving his/her ability.

Further, the indicator values may be obtained by referring to history information stored in the storage 73 or in a database device. The database device that stores user data allows easy retrieval of indicator values corresponding to the respective users.

Further, the program 731 of this embodiment may be installed in a computer, so that the processing related to the activity support method can be executed through software. With the program 731, a computer can easily output information suitable for the target user to achieve his/her goal without using special hardware.

According to this embodiment, the server device 7 as the information output device includes the controller 71. The controller 71 obtains a goal related to an activity performed by the target user. The controller 71 obtains multiple indicator values indicating an actual result of the activity. The controller 71 identifies a related indicator from the indicator values, the related indicator changing along with a goal-related parameter that corresponds to the first goal. The controller 71 outputs information for the first user to improve the related indicator in performing the activity. The server device 7 can check how much the related indicators have been improved, which highly correlate with the goal-related parameter corresponding to the goal and change along with the goal-related parameter. The server device 7 can output information that encourages the user to improve the related indicator having a particularly low degree of improvement. Thus, to achieve the goal, the user is allowed to grasp a specific aspect that has not been improved as estimated in the activity. The user can perform the activity in a more effective way, based on the aspect to be improved to achieve the goal.

The above embodiments do not limit the present disclosure and can be variously modified. For example, in the above, the machine learning model 7311 is trained to estimate the next related indicator. However, a different method may be used to estimate the next related indicator. For example, the next related indicator may be estimated based on trend analysis or multiple regression analysis.

Although the related indicator in the next activity is estimated in the above, the present disclosure is not limited to this. The average change in the related indicator over multiple times of the activity may be estimated. Thus, the effects of weather conditions such as temperature, humidity, and wind can be leveled out and reduced.

Further, the identification of the related indicator may not involve the comparison between the goal achievement rate and the improvement rate of each indicator, based on the goal-unachieved data. The highly correlated indicator that highly correlates with the goal-related parameter may be directly used as the related indicator, based on only the goal-achieved data. For another example, the correlation among parameters may be determined by a method different from the above.

The above description relates to supporting improvement of ability in the running activity and improvement of academic ability. However, the present disclosure is not limited to this. The activity to be supported may be other sports or specialized knowledge or special skills, such as board games (e.g., Go and Shogi) that can be numerically evaluated in multiple aspects regarding the learning state.

Further, the range of characteristics similar to that of the user may be appropriately adjusted according to the nature of the above-mentioned activities to be supported.

Although the server device 7 performs various processes related to the support, the present disclosure is not limited to this. The processes related to the support may be executed by the electronic device 1. For another example, the processes related to the support may be distributed to and executed by multiple information processing devices.

In the above description, the storage 73 is a nonvolatile memory, such as an HDD or a flash memory, as an example of a computer-readable medium for storing the program 731 and the machine learning model 7311 related to the activity support control of the present disclosure. However, the computer-readable medium is not limited to these. The computer-readable medium can be a different type of nonvolatile memory, such as a magneto-resistive randomaccess memory (MRAM), or a portable recording medium, such as a CD-ROM or a DVD. Further, a carrier wave may be used as a medium to provide data of the program of the present disclosure via a communication line.

The detailed configurations, contents and orders of the steps in the processes, and so forth shown in the above embodiments can be appropriately modified without departing from the scope of the present disclosure. The scope of the present disclosure includes the scope of the invention described in the claims and their equivalents.

## Claims

1. An activity support method to be executed by a computer (7, 1, 7a, 1a), the method comprising:
obtaining a first goal of a first user in an activity;
obtaining indicator values of the first user, the indicator values indicating an actual result of the activity;
identifying a related indicator from the indicator values, the related indicator changing along with a goal-related parameter that corresponds to the first goal; and
outputting information for the first user to improve the related indicator in performing the activity.

2. The activity support method according to claim 1, wherein the computer determines the related indicator, based on a relation between the goal-related parameter and indicator values of second users who set a second goal similar to the first goal and who have a characteristic corresponding to a characteristic of the first user.

3. The activity support method according to claim 2, wherein:
the second users include a third user who achieved the second goal and a fourth user who did not achieve the second goal, and
the computer determines an indicator that satisfies following (i) and (ii) to be the related indicator:
(i) in indicator values of the third user, the indicator correlates with the goal-related parameter by a degree greater than a first reference, and
(ii) in indicator values of the fourth user, the indicator has an improvement rate less than a goal achievement rate of the goal-related parameter and less than a second reference.

4. The activity support method according to claim 2, wherein the second users having the characteristic corresponding to the characteristic of the first user meet a first requirement that the second users have a physical characteristic within a first reference range from a physical characteristic of the first user.

5. The activity support method according to claim 2, wherein the second users having the characteristic corresponding to the characteristic of the first user meet a second requirement that the second users have a behavioral tendency within a second reference range from a behavioral tendency of the first user.

6. The activity support method according to claim 2, wherein:
based on a correlation between the goal-related parameter and the related indicator of the second users, the computer obtains an estimated value of the related indicator that changes as the first user performs the activity, and
based on a difference between the estimated value and an actual value of the related indicator obtained from the activity by the first user, the computer outputs the information for improving the related indicator.

7. The activity support method according to claim 6, wherein the computer obtains the estimated value of the related indicator by using a machine learning model (7311) that is trained based on the correlation and that outputs an estimated value of the related indicator to be obtained next in response to input of time-series data of the related indicator obtained multiple times.

8. The activity support method according to claim 2, wherein:
the computer is capable of obtaining multiple levels of the first achievement goal, and
the computer determines the related indicator for each of the multiple levels of the first goal.

9. The activity support method according to claim 1, wherein the activity includes studying aimed at improving academic ability.

10. The activity support method according to claim 1, wherein the computer obtains the indicator values by referring to history information (733) stored in a storage (73) or a database device.

11. A program (731) that causes a computer (7, 1, 7a, 1a) to:
obtain a first goal of a first user in an activity,
obtain indicator values of the first user, the indicator values indicating an actual result of the activity,
identify a related indicator from the indicator values, the related indicator changing along with a goal-related parameter that corresponds to the first goal, and
output information for the first user to improve the related indicator in performing the activity.

12. An activity support device (7, 1, 7a, 1a) comprising a processor (71), wherein the processor:
obtains a first goal of a first user in an activity,
obtains indicator values of the first user, the indicator values indicating an actual result of the activity,
identifies a related indicator from the indicator values, the related indicator changing along with a goal-related parameter that corresponds to the first goal, and
outputs information for the first user to improve the related indicator in performing the activity.

13. An activity support system (100, 100a) comprising:
a server device (7, 7a) that includes a processor (71); and
an electronic device (1, 1a) that is communicably connected to the server device over a network,
wherein the processor
obtains a first goal of a first user in an activity,
obtains indicator values of the first user, the indicator values indicating an actual result of the activity,
identifies a related indicator from the indicator values, the related indicator changing along with a goal-related parameter that corresponds to the first goal, and
outputs information for the first user to improve the related indicator in performing the activity.
